# EUROPEAN PATENT APPLICATION

(11) **EP 4 037 431 A1**
(43) Date of publication of application: **03.08.2022**
(21) Application number: 20868650.1
(22) Date of filing: 11.09.2020
(51) Int. Cl.: H05B 3/14, H05B 3/02, B23K 3/03

(54) **CERAMIC ELECTRIC HEATING BODY HAVING TWO-LAYER STRUCTURE, AND ELECTRIC SOLDERING IRON**

(30) Priority: 25.09.2019 CN 201910912270
(71) Applicant: CHONGQING LE-MARK TECHNOLOGY CO., LTD., Jiulongpo District Chongqing 401329 (CN)
(72) Inventor: LEIGH, Peter, Chongqing 401329 (CN)
(74) Representative: Angerhausen, Christoph
(86) International application number: PCT/CN2020/114709
(87) International publication number: WO 2021/057507

(57) **Abstract**

Disclosed are a ceramic electric heating element having a two-layer structure, and an electric soldering iron. The electric heating element having a two-layer ceramic structure comprises an inner conducting layer and an outer insulating layer; the insulating layer wraps the conducting layer, and the conducting layer is exposed outside the insulating layer at the head and tail of the electric heating element. In addition, the ceramic electric heating element having a two-layer structure is used to the electric soldering iron. The present invention allows the miniaturization in the manufacture of ceramic electric heating bodies, with low production cost and low difficulty in respect of the process.

## Description

### Technical Field

The disclosure relates to an electric heating element, and in particular to an electric heating element having a full-ceramic structure, and use of such electric heating bodies.

### Background

As a conducting material, a ceramic electric heating element may be used as an electric heating element of an ignition mechanism, and igniting or heating is realized by an extremely high temperature reached at the moment of the electrification of ceramic. It may be used in the fields of engine ignition, gas stove ignition, water heater ignition, infrared radiation source, oxygen sensor heating, soldering iron tip heating and the like. The electric heating element of a ceramic material has the advantages of fast start-up, high temperature resistance, corrosion resistance, high strength and long service life and the like.

Chinese patent CN100484337C discloses a multilayer circular ceramic electric heating element and a preparation process thereof, and specifically discloses that a resistance layer, an insulating layer and a conducting layer of the ceramic electric heating element comprise four components: Si₃N₄, Al₂O₃, Y₂O₃, and MoSi₂; Si₃N₄ is used to form a network structure, Al₂O₃ and Y₂O₃ are used to adjust the network structure, and MoSi₂ is used to form a conductive heating material.

A ceramic electric heating element prepared with the described components provides a high reaction speed, high temperature, short time for reaching a desired temperature, long service life, high yield of a manufacturing process, and low manufacturing cost.

However, a composite material prepared with the preparation materials listed in the described patent still have the following problems in some usage scenarios: the large temperature coefficient of resistance and large impulse current directly increase the cost of power supply, and the rapid change speed of current/resistance causes the algorithm for power control to be complicated.

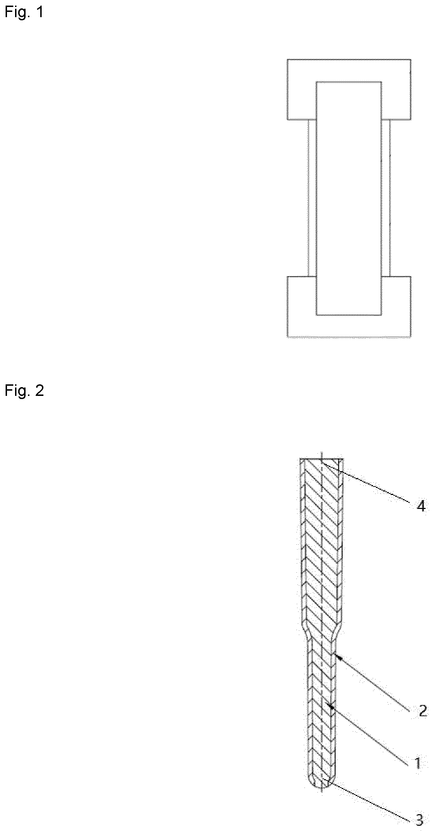

In addition, Chinese patent CN105072718A discloses a two-layer ceramic electric heating element, the ceramic electric heating element comprising an inner resistance layer, which is completely covered with an outer insulating layer, and conductive covers being provided at both ends of the ceramic electric heating element (see Fig. 1). A ceramic electric heating element having such a structure is fully covered with the insulating layer, has a large volume, and can be used in the field of high temperature. However, it is not applicable to many fields in which spaces are extremely restricted.

At present, among the electric heating bodies in the world, metal heating tubes produced by Spain JBC have the smallest diameter, and the assembly diameter thereof is 1.4 mm. JBC installs a metal heating wire in such a small metal tube, and space the casing pipe and the metal wire by means of dense, high-thermal-conductive and insulating powder; the process is difficult and the cost are very high.

In addition, for an existing electric soldering iron, a heating component thereof is formed by winding parallel electric heating wires on a hollow porcelain tube. Due to structural limitation of the heating components of existing electric soldering irons, a size of an electric soldering iron cannot be reduced further. However, existing large-sized electric soldering irons are not suitable for welding of increasingly fine electronic elements: they are not able to accurately weld a fine electronic element, and easily affects nearby electronic elements. Therefore, it is a goal pursued by those skilled in the art to provide a miniaturized heating component so that an electric soldering iron may be further miniaturized to adapt the welding of the existing electronic element.

### Summary

An object of the disclosure is to provide a two-layer ceramic electric heating element having a small diameter, reliable structure, controllable cost and low process difficulty.

In order to achieve the described object, the disclosure suggests: an electric heating element having a two-layer ceramic structure, characterized in that: the electric heating element includes an inner conducting layer and an outer insulating layer; the insulating layer wraps the conducting layer, and the conducting layer is exposed outside the insulating layer at the head and the tail of the electric heating element. Such a structure makes it possible to obtain a full-ceramic electric heating element having a reliable structure and small-volume, with low cost and low process difficulty. For an electric heating element having such a structure, the diameter of the electric heating element can be controlled to be less than 1 mm.

In order to further reduce the process difficulty, the tail of the conducting layer is aligned to the tail of the insulating layer.

In order to further improve the reliability in operation, the tail of the conducting layer is provided with a blind hole or a groove.

Preferably, the tail of the conducting layer is provided with a V-shaped blind hole.

In order to further reduce the impulse current during operation, the preparation material of the conducting layer is prepared with the following materials in following proportions: silicon nitride : silicon carbide : molybdenum disilicide : yttrium oxide : lanthanum oxide : aluminum oxide = (200-700) : (100-700) : (600-1500) : (40-80) : (10-70) : (5-50).

In order to further reduce the impulse current, the preparation material of the conducting layer is prepared with the following materials in following proportions: silicon nitride : silicon carbide : molybdenum disilicide : yttrium oxide : lanthanum oxide : aluminum oxide = (300-600) : (200-500) : (800-1200) : (50-70) : (30-60) : (20-30).

In order to further reduce the impulse current, the preparation material of the conducting layer is prepared with the following materials in following proportions: silicon nitride: silicon carbide: molybdenum disilicide : yttrium oxide : lanthanum oxide : aluminum oxide = 500 : 450 : 900 : 50 : 45 : 25.

In order to further reduce the impulse current during operation, the preparation material of the insulating layer is prepared with the following materials in following proportions: silicon nitride : silicon carbide : molybdenum disilicide : yttrium oxide : lanthanum oxide : aluminum oxide = (400-900) : (50-200) : (500-800) : (40-90) : (30-80) : (5-60).

In order to further reduce the impulse current, the preparation material of the insulating layer is prepared with the following materials in following proportions: silicon nitride : silicon carbide : molybdenum disilicide : yttrium oxide : lanthanum oxide : aluminum oxide = (600-700) : (100-150):(600-700) : (50-70) : (50-60) : (20-40).

In order to further reduce the impulse current, the preparation material of the insulating layer is prepared with the following materials in following proportions: silicon nitride : silicon carbide : molybdenum disilicide : yttrium oxide : lanthanum oxide : aluminum oxide = 550 :120 : 650 : 55 : 60 : 40.

A ceramic electric heating element, comprising an electric heating element having a two-layer ceramic structure as described above, the head of the electric heating element being provided with a metal coating covering a conducting layer and an insulating layer. The electric heating element is not coated with the metal coating, so that such a full-ceramic electric heating element having a two-layer structure and small-volume can be used to more tiny heating electrical elements, such as an electric soldering iron.

In order to further improve the structural reliability and heating reliability, the material of the metal coating is silver copper + titanium.

In order to further improve the reliability in operation, the head of the electric heating element is inserted into a metal housing to serve as a negative electrode, and the conducting layer exposed at the tail of the electric heating element is welded to an electrode to serve as a positive electrode.

Another object of the disclosure is to provide an electric soldering iron with a smaller volume.

An electric soldering iron, comprising a ceramic electric heating element with metalized head as described above, the head of the ceramic electric heating element being inserted into a blind hole of a soldering iron tip to serve as a negative electrode, and the tail of the ceramic electric heating element being welded to a central electrode to serve as a positive electrode.

An electric soldering iron, comprising a ceramic electric heating element of which the head is not metalized, and further comprising a soldering iron tip, wherein a blind hole is provided at one end of the soldering iron tip, a metal layer is provided within the blind hole, the material of the metal layer is silver copper + titanium, the head of the ceramic electric heating element is inserted into the blind hole of the soldering iron tip and welded to the metal layer, and the tail of the ceramic electric heating element is welded to an electrode.

The ceramic electric heating element having a two-layer structure of the disclosure has the following advantages:
1. The ceramic electric heating element having a two-layer structure of the disclosure uses a full-ceramic hierarchical structure, and a small-volume electric heating element with a diameter less than 1 mm may be obtained. The diameter thereof is more than 0.4 mm smaller than that of the smallest existing electric heating element. In addition, compared with the smallest existing electric heating element, the full-ceramic electric heating element having a two-layer structure of the disclosure has a more reliable structure, lower cost and process difficulty, and has the ability to further reduce the diameter of the electric heating element.
2. The ceramic electric heating element having a two-layer structure of the disclosure may also be used as a thermocouple if the head thereof is not metalized. The central electrode welded at the tail thereof may be used as a thermocouple, or the central electrode may be used as one pole of the thermocouple, and the metal material or its extension material connected with the conducting layer at the head of the electric heating element may be used as the other pole of the thermocouple. The temperature of the heating area at the head may be accurately controlled, and the temperature of the electric heating element may also be detected.
3. The electric heating element of the disclosure with metalized head, is suitable for a tiny heating electrical element under 800°C, and may also have the advantage of quick start-up. For those electrical elements of which spaces are limited, an electric heating element with more advantages such as quick start-up and being more reliable is provided. For example, the electric heating element of the disclosure may be used for an electric soldering iron.
5. Different Temperature Coefficients of Resistance (TCRs) are achieved, and arbitrary conversion from a negative temperature coefficient to a positive temperature coefficient is achieved, so that not only TCR=-500 but also TCR=5000 can be achieved, meanwhile various performance advantages of the original ceramic material are guaranteed, such as quick start-up, high temperature resistance, corrosion resistance, and high strength.
6. Small impulse current: the impulse current is small while the temperature coefficient of resistance TCR is large, and the impulse current is also small while the temperature coefficient of resistance TCR is small. For negative or low TCR, because of the reduction of the starting current, the costs of supporting power supply and control element may be greatly reduced. In this way, problems of high cost of the supporting control electronic element of the original ceramic structure material element in actually using and difficult control are effectively solved, and a similar performance index of the international ceramic material structure element is achieved. For example, 100 W of the power supply used previously may be replaced with a power supply of 60 W through the use of the material of the disclosure, reducing the requirement for power supply capacity.

### Brief Description of the Drawings

Fig. 1 is a structure of an existing two-layer ceramic electric heating element;
Fig. 2 is a structure of a two-layer ceramic electric heating element in Embodiment 1 (blank);
Fig. 3 is a structure of a two-layer ceramic electric heating element in Embodiment 2 (blank);
Fig. 4 is a structure of a two-layer ceramic electric heating element in Embodiment 1 (with a metal housing);
Fig. 5 is a structure of a two-layer ceramic electric heating element in Embodiment 2 (with a metal housing);
Fig. 6 is a structural diagram of an electric soldering iron in Embodiment 3; and
Fig. 7 is a cross-sectional view of Fig. 6.

### Detailed Description of the Embodiments

The disclosure is described below through embodiments shown in drawings, but the disclosure is not limited to the described implementation modes. Any improvements or replacements within the basic spirit of the embodiment still belong to the scope of protection of the claims of the disclosure.

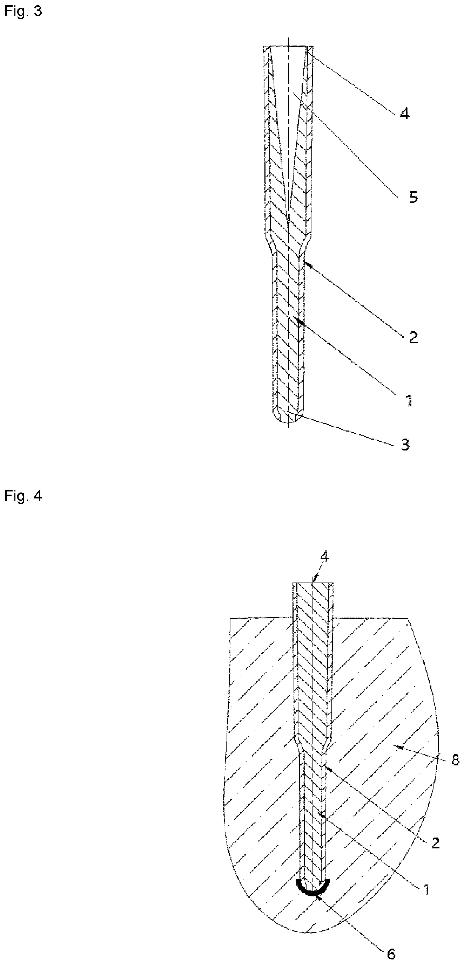

**Embodiment 1**: As shown in Fig. 2 and Fig. 4, a ceramic electric heating element having a two-layer structure is provided, the electric heating element includes an inner conducting layer 1 and an outer insulating layer 2; the outside of the conducting layer is wrapped by the insulating layer, and the conducting layer at a head 3 and a tail 4 of the electric heating element is exposed outside the insulating layer. In addition, the conducting layer and the insulating layer are aligned at the tail of the ceramic electric heating element in the embodiment. Through a technical solution of the embodiment, a full-ceramic electric heating element having a two-layer structure with a diameter of less than 1 mm is obtained.

The ceramic electric heating element having a two-layer structure in the embodiment may be used as a thermocouple. The conducting layer at the tail thereof is welded to a central electrode 7. The central electrode may be used as a thermocouple, or the central electrode may be used as one pole of the thermocouple, and the metal material or its extension material connected with the conducting layer at the head of the electric heating element may be used as the other pole of the thermocouple. The temperature of a heating area at the head may be accurately controlled, and the temperature of the electric heating element may also be detected at the same time.

In addition, the embodiment provides usage in which the described ceramic electric heating element having a two-layer structure is used as an electric heating element. Specifically, the head of the electric heating element is coated with metal coating 6 covering the conducting layer and the insulating layer. The metal coating is made of high temperature resistant material. In the embodiment, the material used for the metal coating is silver copper + titanium.

Through metallization of the head and welding with the central electrode 7 of the tail, the electric heating element in the embodiment may be used to a smaller heating electrical element, as to meet more requirements of customers. Compared with the existing ceramic electric heater, such a full-ceramic two-layer electric heating element omits the side electrode, is connected to the negative electrode with the head and connected to the tail with the positive electrode, so that the diameter thereof is smaller and more controllable. It is particularly suitable for a tiny heating electrical element under 800°C, and can also have the advantage of quick start-up.

As an illustration, a ceramic electric heating element manufacturer may only produce and sell full-ceramic electric heating bodies having a two-layer structure, namely blank structures of ceramic electric heating bodies, so that a customer who has purchased the full-ceramic electric heating bodies can weld the central electrode and then use them as thermocouple, or perform head metallization and then use them as the electric heating bodies. See Fig. 2 and Fig. 3.

Certainly, a ceramic electric heating element manufacturer may also pre-metallize the blank structures of ceramic electric heating bodies and/or perform tail-central electrode welding before selling, so that a customer only needs to insert the ceramic electric heating element, of which the head is metalized, into a metal housing 8 for use after purchase, as shown in Fig. 4.

There is another possibility that a ceramic electric heating element manufacturer not only metallizes the head of an ceramic electric heating element and welds the central electrode with the tail, but also inserts the metalized ceramic electric heating element into a metal housing 8 and sells an integrated product, such as an electric soldering iron.

In the embodiment, the preparation material of the conducting layer is prepared with the following materials in following proportions: silicon nitride : silicon carbide : molybdenum disilicide : yttrium oxide : lanthanum oxide : aluminum oxide = (200-700) : (100-700) : (600-1500) : (40-80) : (10-70) : (5-50). The preparation material of the insulating layer is prepared with the following materials in following proportions: silicon nitride: silicon carbide: molybdenum disilicide: yttrium oxide: lanthanum oxide: aluminum oxide = (400-900) : (50-200) : (500-800) : (40-90) : (30-80) : (5-60).

The conducting layer may be prepared with a composite material prepared in the following material parts: silicon nitride : silicon carbide : molybdenum disilicide : yttrium oxide : lanthanum oxide : aluminum oxide = (200-700) : (100-700) : (600-1500) : (40-80) : (10-70) : (5-50).

Different proportions of parts for the preparation can be chosen and are not limited to:
For example, silicon nitride : silicon carbide : molybdenum disilicide : yttrium oxide : lanthanum oxide : aluminum oxide = 200 :100 : 600 : 40 : 10:5.
For example, silicon nitride : silicon carbide : molybdenum disilicide : yttrium oxide : lanthanum oxide : aluminum oxide = 400 : 300 : 800 : 60 : 30 : 15.
For example, silicon nitride : silicon carbide : molybdenum disilicide : yttrium oxide : lanthanum oxide : aluminum oxide = 600 : 500 :1000 : 70 : 50 : 30.
For example, silicon nitride : silicon carbide : molybdenum disilicide : yttrium oxide : lanthanum oxide : aluminum oxide = 500 : 600 : 1300 : 50 : 60 : 45.
For example, silicon nitride : silicon carbide: molybdenum disilicide : yttrium oxide : lanthanum oxide : aluminum oxide =700 : 700 : 1500 : 80 : 70 : 50.

For the insulating layer, it may be prepared by using the composite material prepared in the following material parts: silicon nitride : silicon carbide : molybdenum disilicide : yttrium oxide : lanthanum oxide : aluminum oxide = (400-900) : (50-200) : (500-800) : (40-90) : (30-80) : (5-60).

Different proportions of parts may be chosen for the preparation but are not limited to:
For example, silicon nitride : silicon carbide : molybdenum disilicide : yttrium oxide : lanthanum oxide : aluminum oxide = 400 : 50 : 500 : 40 : 30 : 5;
For example, silicon nitride : silicon carbide : molybdenum disilicide : yttrium oxide : lanthanum oxide : aluminum oxide = 500 : 100 : 600 : 60 : 70 : 35;
For example, silicon nitride : silicon carbide : molybdenum disilicide : yttrium oxide : lanthanum oxide : aluminum oxide = 700 : 150 : 700 : 50 : 40 : 30;
For example, silicon nitride : silicon carbide : molybdenum disilicide : yttrium oxide : lanthanum oxide : aluminum oxide = 800 : 90 : 650 : 70 : 40 : 50;
For example, silicon nitride : silicon carbide : molybdenum disilicide : yttrium oxide : lanthanum oxide : aluminum oxide = 900 : 200 : 800 : 90 : 80 : 60.

As another implementation mode in the embodiment, the preparation material of the conducting layer and/or the preparation material of the insulating layer further include tungsten carbide (WC).

As another implementation mode in the embodiment, the preparation material of the conducting layer and/or the preparation material of the insulating layer further include ytterbium oxide (Yb₂O₃).

Herein, in addition, the two-layer ceramic electric heating element in the embodiment is manufactured by grouting, including the following steps:
Step 1: preparing mixed slurry: silicon nitride, silicon carbide, molybdenum disilicide, yttrium oxide, lanthanum oxide, and aluminum oxide powder are mixed with water according to a weight ratio and stirred uniformly, then loaded in a container. Herein, different mixed slurries are prepared according to different layers of the multilayer ceramic electric heating element, and loaded in different containers for standby.

As an implementation mode in the embodiment, total weight of the described material compositions : water weight = 1 : (1-4).

Step 2: grouting and forming: a grouting mold of which two ends are opened is put on a grouting machine, an inner diameter of the grouting mold being 0.8 mm, and the mixed ceramic slurry is then injected into the grouting machine to start grouting and forming. According to the number of layers of the ceramic electric heating element, the grouting is performed in stages, and the grouting is sequentially performed from the outer layer to the inner layer.

Step 3: sintering: a dried water-lost ceramic element is taken out from the grouting mold, and put into a sintering mold, finally, the sintering mold loaded with the ceramic blank is put into a sintering furnace for sintering, and sintered for 7-12 hours at a temperature of 1400°C and a pressure of 2000-5000 Kpa.

Step 4: the sintered ceramic material element is taken out from the sintering mold, external trimming is performed, and obtain a ceramic electric heating element blank.

The ceramic electric heating element having a two-layer structure obtained in the embodiment is a ceramic electric heating element with a diameter of 0.8 mm. Compared with the existing smallest-sized electric heating element, not only the volume is reduced, but also the electric heating element of the embodiment is more reliable in structure, lower in cost and process difficulty, and has an ability to further reduce of the diameter of the heating element.

The ceramic electric heating element blank having a two-layer structure obtained according to the described process may be sold directly, or may also be sold after the head of the ceramic electric heating element blank having a two-layer structure is metalized and the tail is welded to the central electrode. It is also possible to sell the ceramic electric heating element with metalized head after being inserted into the metal housing.

Different TCRs are achieved by using the ceramic electric heating element manufactured by the composite material of the embodiment, and arbitrary conversion from a negative temperature coefficient to a positive temperature coefficient is achieved, so that not only TCR=-500 may be achieved, but also TCR=5000 may be achieved, meanwhile various performance advantages of the original ceramic material are guaranteed, such as quick start-up, high temperature resistance, corrosion resistance, and high strength.

Small impulse current: the impulse current is small while the temperature coefficient of resistance TCR is large, and the impulse current is also small while the temperature coefficient of resistance TCR is small. For negative or low TCR, because of the reduction of the starting current, the costs of supporting power supply and control element may be greatly reduced. In this way, problems of high cost of the supporting control electronic element of the original ceramic structure material element in actually using and difficult control are effectively solved, and a similar performance index of the international ceramic material structure element is achieved.

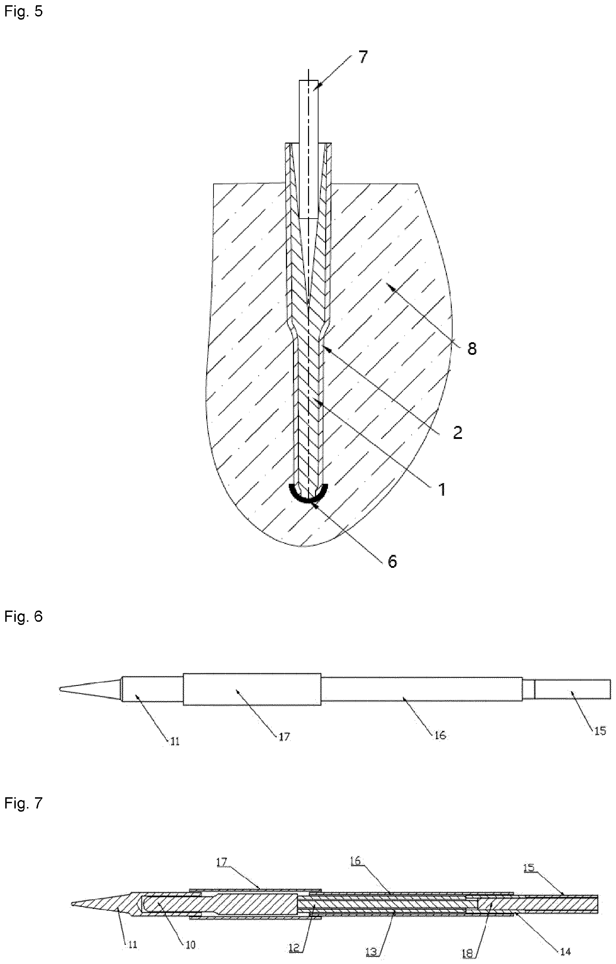

**Embodiment 2**: As shown in Fig. 3 and Fig. 5, the embodiment is modified on the basis of Embodiment 1.

In the embodiment, the electric heating element includes an inner conducting layer 1 and an outer insulating layer 2; the outside of the conducting layer is wrapped by the insulating layer, and the conducting layer is exposed outside the insulating layer at the head 3 and the tail 4 of the electric heating element. In addition, the conducting layer at the tail of the ceramic electric heating element in this embodiment is provided with a groove or a blind hole. A square groove, a circular groove, a polygonal groove, a circular blind hole, a tapered blind hole, a V-shaped blind hole and the like may be installed. In the embodiment, the tail of the conducting layer is provided with the V-shaped blind hole 5. By the technical solution of this embodiment, a full-ceramic electric heating element having a two-layer structure with a diameter of less than 1 mm may be obtained.

For the described full-ceramic electric heating element having a two-layer structure, a central electrode may be welded in the V-shaped blind hole of the conducting layer at the tail thereof, the central electrode is partially inserted into the blind hole, and partially exposed outside the electric heating element. In addition, a gap between the electrode and the V-shaped blind hole is filled with other materials such as solder. The connection stability between the central electrode and the electric heating element is further guaranteed.

In operation, the electric heating element welded to a central electrode may be used as a thermocouple. It may also be used as the electric heating element after the head of the full-ceramic electric heating element having a two-layer structure is further metalized. The metallization process is that the head is coated with metal coating, and the conducting layer and the insulating layer are simultaneously wrapped by the metal coating. As an implementation mode in the embodiment, the material of the metal is an alloy of silver copper + titanium. Certainly, the electric heating element head after being metalized may also be inserted into a metal housing to become a negative electrode, and the exposed central electrode may be used as a positive electrode.

As an illustration, a ceramic electric heating element manufacturer may only produce and sell full-ceramic electric heating bodies having a two-layer structure, namely blank structures of ceramic electric heating bodies, so that a customer can perform central electrode welding and then use them as thermocouple, or perform head metallization and then use them as the electric heating bodies after purchase. See Fig. 2 and Fig. 3.

Certainly, a ceramic electric heating element manufacturer may also pre-metallize the blank structures of ceramic electric heating bodies and/or perform tail-central electrode welding before selling, so that a customer only needs to insert the ceramic electric heating element, of which the head is metalized, into a metal housing for use after purchase, as shown in Fig. 4.

There is another possibility that a ceramic electric heating element manufacturer not only metallizes the head of an ceramic electric heating element and welds the central electrode with the tail, but also inserts the metalized ceramic electric heating element into a metal housing and sells an integrated product, such as an electric soldering iron.

In addition, the preparation materials of the insulating layer and the conducting layer of the two-layer ceramic electric heating element in the embodiment are the same as those in Embodiment 1. The preparation process is also the same, but the inner diameter of the grouting mold in this embodiment is 1 mm, and the diameter of the ceramic electric heating element obtained by grouting is 1 mm.

**Embodiment 3**: As shown in Fig. 6 and Fig. 7, in this embodiment, the ceramic electric heating element in Embodiment 1 or Embodiment 2 is used to a small heating part such as an electric soldering iron.

A two-layer ceramic electric heating element blank is used, the head thereof is coated with a metalized coating, and the material of the metalized coating is silver copper + titanium.

In addition, as one of the implementation modes, the ceramic electric heating element in this embodiment is divided into a front section near the head and a rear section near the tail, the diameter of the front section being smaller than that of the rear section.

The electric soldering iron includes a soldering iron tip 11, one end of the soldering iron tip is a working end, and the other end is provided with a blind hole. The front section of the ceramic electric heating element 10 is partially inserted into the blind hole, so that the metalized head of the ceramic electric heating element is in contact with the soldering iron tip. The conducting layer at the tail of the ceramic electric heating element is axially welded to a metal wire 12, and the other end of the metal wire is welded to a metal electrode 18. In addition, an outer wall of the thermocouple wire is wrapped with an insulating sleeve 13, the exterior, near the metal wire, of the metal electrode is wrapped with an upper insulating sleeve 14, and the other section of the stainless steel electrode is wrapped with a tail tube 15. Outer walls of the insulating sleeve and the upper insulating sleeve are wrapped with an outer tube 16, and a metal sleeve 17 is fitted between outer walls of the outer tube and the soldering iron tip, one end of the metal sleeve wraps the soldering iron tip, and the other end wraps the outer tube.

The metal wire 12 and the metal sleeve 17 may be made of different materials to form two poles of the thermocouple, as to achieve the purpose of temperature measurement while serving as an electrode and a structural component.

As another implementation mode in this embodiment, it is integrally formed in the blind hole of the electric soldering iron: a metal material of silver copper + titanium is provided in the blind hole, and the ceramic electric heating element head that is not metalized is directly inserted into the blind hole and welded, so that the head of the electric heating element is in contact with the metal layer.

Using the electric soldering iron of this embodiment makes the electric soldering iron be further miniaturized to adapt an increasingly fine electronic welding industry. It facilitates temperature measurement and temperature control during welding.

## Claims

1. A ceramic electric heating element having a two-layer structure, wherein the electric heating element comprises an inner conducting layer and an outer insulating layer; the insulating layer wraps the conducting layer, and the conducting layer being exposed outside the insulating layer at the head and tail of the electric heating element.

2. The ceramic electric heating element having a two-layer structure according to claim 1, wherein the tail of the conducting layer is aligned to the tail of the insulating layer.

3. The ceramic electric heating element having a two-layer structure according to claim 1, wherein the tail of the conducting layer is provided with a blind hole or a groove.

4. The ceramic electric heating element having a two-layer structure according to claim 2, wherein the tail of the conducting layer is provided with a V-shaped blind hole.

5. The ceramic electric heating element having a two-layer structure according to any one of the preceding claims, wherein a preparation material of the conducting layer is prepared with the following materials in following proportions: silicon nitride : silicon carbide : molybdenum disilicide : yttrium oxide : lanthanum oxide : aluminum oxide = (200-700) : (100-700) : (600-1500) : (40-80) : (10-70): (5-50).

6. The ceramic electric heating element having a two-layer structure according to any one of the preceding claims, wherein the preparation material of the insulating layer is prepared with the following materials in following proportions: silicon nitride : silicon carbide : molybdenum disilicide : yttrium oxide : lanthanum oxide : aluminum oxide = (400-900) : (50-200) : (500-800) : (40-90) : (30-80) : (5-60).

7. A ceramic electric heating element, comprising a ceramic electric heating element having a two-layer structure according to any one of the preceding claims, wherein the head of the electric heating element is provided with a metal coating covering a conducting layer and an insulating layer.

8. The ceramic electric heating element according to claim 7, wherein the material of the metal coating is silver copper + titanium.

9. The ceramic electric heating element according to claim 7 or 8, wherein the head of the electric heating element is inserted into a metal housing to serve as a negative electrode, and the conducting layer exposed at the tail of the electric heating element is welded to an electrode to serve as a positive electrode.

10. An electric soldering iron comprising a ceramic electric heating element according to claim 7, the head of the ceramic electric heating element is inserted into a blind hole of a soldering iron tip, and the tail of the ceramic electric heating element is welded to an electrode.

11. An electric soldering iron, comprising a ceramic electric heating element according to any one of claims 1-6, and further comprising a soldering iron tip, wherein a blind hole is provided at one end of the soldering iron tip, a metal layer is provided within the blind hole, the material of the metal layer is silver copper + titanium, the head of the ceramic electric heating element is inserted into the blind hole of the soldering iron tip and welded to the metal layer, and the tail of the ceramic electric heating element is welded to an electrode.
